(19) **Europäisches Patentamt**
**European Patent Office**
**Office européen des brevets**

(11) **EP 3 518 582 B1**

(12) **EUROPEAN PATENT SPECIFICATION**

(45) Date of publication and mention
of the grant of the patent:
**30.09.2020 Bulletin 2020/40**

(51) Int Cl.:
*H04W 48/04* ^(2009.01)   *H04W 88/02* ^(2009.01)

(21) Application number: **17868101.1**

(22) Date of filing: **03.11.2017**

(86) International application number:
**PCT/KR2017/012383**

(87) International publication number:
**WO 2018/084620 (11.05.2018 Gazette 2018/19)**

(54) **METHOD AND TERMINAL TO PERFORM A CELL RE-SELECTION PROCEDURE**

VERFAHREN UND ENDGERÄT ZUR DURCHFÜHRUNG EINES
ZELLENWIEDERAUSWAHLVERFAHRENS

PROCÉDÉ ET TERMINAL POUR EFFECTUER UNE PROCÉDURE DE RESÉLECTION DE CELLULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2016 US 201662418039 P**

(43) Date of publication of application:
**31.07.2019 Bulletin 2019/31**

(73) Proprietor: **LG Electronics Inc.
Seoul 07336 (KR)**

(72) Inventors:
• **LEE, Youngdae**
**Seoul 06772 (KR)**
• **KIM, Sangwon**
**Seoul 06772 (KR)**
• **LEE, Jaewook**
**Seoul 06772 (KR)**

(74) Representative: **Katérle, Axel
Wuesthoff & Wuesthoff
Patentanwälte PartG mbB
Schweigerstraße 2
81541 München (DE)**

(56) References cited:
WO-A1-2010/123416     WO-A1-2012/137041
WO-A2-2009/007720     WO-A2-2013/025034
KR-A- 20070 105 255     KR-A- 20100 038 873
KR-A- 20100 064 833     KR-B1- 101 600 013

• **"3 Generation Partnership Project; Technical
Specification Group Radio Access Network;
Evolved Universal Terrestrial Radio Access
(E-UTRA); User Equipment (UE) procedures in
idle mode (Release 14)", 3GPP STANDARD; 3GPP
TS 36.304, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG2, no. V14.0.0, 3 October 2016 (2016-10-03),
pages 1-46, XP051172891, [retrieved on
2016-10-03]**

**Description**

**BACKGROUND OF THE INVENTION**

Field of the invention

The present invention relates to a technology for performing, by a terminal, a cell re-selection procedure in consideration of a movement state.

Related Art

In order to meet the demand for wireless data traffic soring since the 4th generation (4G) communication system came to the market, there are ongoing efforts to develop enhanced 5th generation (5G) communication systems or pre-5G communication systems. For the reasons, the 5G communication system or pre-5G communication system is called the beyond 4G network communication system or post long-term evolution (LTE) system.

In order to achieve a high data rate, it is considered to implement a super high frequency (millimeter wave (mmWave)) band, e.g., 60 GHz band, in the 5G communication system. To decrease a propagation loss of a radio wave and increase a transmission distance in the super high frequency band, beamforming, massive multiple-input multiple-output (MIMO), Full Dimensional MIMO (FD-MIMO), array antenna, analog beamforming, and large scale antenna techniques are discussed in the 5G communication system.

In addition, in the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

WO 2012/137041 A1 discloses processes regarding modification of a mobility priority. In the document a method is described to include accessing mobility priority information of a user equipment and adjusting the mobility priority of the user equipment by applying one or more rules to the mobility priority information based on speed of the user equipment, and performing one or more mobility evaluation procedures based on the adjusted mobility priority, and is alternatively described to include accessing priority information corresponding to a plurality of cells in a wireless communications system, and corresponding to a frequency used for communication by the plurality of cells, wherein at least one first cell of the plurality of cells has a range of communication that is at least partially within a range of communication of at least one second cell of the plurality of cells, and performing one or more mobility evaluation procedures based on the accessed priority information.

WO 2009/007720 A2 discloses a base station reselection method for a mobile terminal camped on a base station, which mobile terminal performs a cell reselection function in accordance with reselection parameters. In the document the method is described to include according a different priority to respective radio resource types, varying the reselection parameters in dependence upon the radio resource type of the base station on which the mobile terminal is camped to cause the mobile terminal to preferentially reselect to a higher priority radio resource type when available, determining radio characteristics of at least one neighbouring base station at a frequency, and varying the frequency at which said radio characteristics are determined in dependence upon the rate of movement of the mobile terminal.

The document 3GPP TS 36.304, v14.0.0 discloses a cell reselection evaluation process, which deals with a reselection priorities handling and consideration of mobility states of a UE.

WO2010/123416 A1 discloses a user equipment in which a frequency search is performed using a physical location (e.g. GPS position) and using information about an allocation of frequency bands and radio access technologies used in these bands in different regions or countries.

**SUMMARY OF THE INVENTION**

The present invention is defined by the appended claims. The following aspects are provided for illustrative purposes.

A high frequency band is mainly used in small cells for capacity enhancement. In other words, the high frequency band is not suitable for use in a terminal moving at a high speed. Therefore, in adjusting the priority for each frequency, it is necessary to consider the moving speed of the terminal, that is, the mobility state.

According to an aspect, there is provided a method for performing, by a terminal, a cell reselection procedure in a wireless communication system, the method including: receiving mobility state information indicating a mobility state of a terminal most suitable for each of frequencies; measuring the mobility state of the terminal; adjusting priorities by assuming, based on the mobility state information, that the frequency most suitable for the measured mobility state has a highest priority; and performing a cell reselection procedure on the basis of the adjusted priorities.

The mobility state information may indicate information on a moving speed of the terminal.

The mobility state information may include absolute priority information constructed based on a quality value measured for each of the frequencies.

The mobility state information may divide a moving speed, which is assumed to be held by the terminal, into a plurality of sections, and indicate a section of the terminal's moving speed most suitable for each of the frequencies.

The mobility state information may indicate a section defined based on one or more threshold speed values for each of the frequencies.

The mobility state information may indicate that higher frequencies are suitable for slower moving speeds.

The adjusting of the priorities may include regarding a frequency other than the frequency most suitable for the measured mobility state as having a lowest priority.

The adjusting of the priorities may include determining whether the frequency most suitable for the measured mobility state provides a service of interest.

The adjusting of the priorities may include regarding the frequency most suitable for the measured mobility state as having the highest priority if the frequency most suitable for the measured mobility state provides the service of interest.

According to another aspect, there is provided a terminal for performing cell reselection procedure in a wireless communication system, the terminal including: a memory; a transceiver; and a processor for connecting the memory to the transceiver, wherein the processor is configured to: receive mobility state information indicating a mobility state of a terminal most suitable for each of frequencies; measure the mobility state of the terminal; adjusting priorities by assuming, based on the mobility state information, that the frequency most suitable for the measured mobility state has a highest priority; and performing a cell reselection procedure on the basis of the adjusted priorities.

The mobility state information may include absolute priority information constructed based on a quality value measured for each of the frequencies.

The mobility state information may divide a moving speed, which is assumed to be held by the terminal, into a plurality of sections, and indicate a section of the terminal's moving speed most suitable for each of the frequencies.

The mobility state information may indicate a section defined based on one or more threshold speed values for each of the frequencies.

The mobility state information may indicate that higher frequencies are suitable for slower moving speeds.

The processor may adjust the priorities by regarding a frequency other than the frequency most suitable for the measured mobility state as having a lowest priority.

According to the present disclosure, by performing the cell reselection procedure in consideration of the movement state of the terminal, it is possible to receive a service of interest using wireless resources efficiently.

**BRIEF DESCRIPTION OF THE DRAWINGS**

FIG. 1 shows the structure of an LTE system.
FIG. 2 shows an air interface protocol of a LTE system for a control plane.
FIG. 3 shows the air interface protocol of the LTE system for a user plane.
FIG. 4 shows the structure of a 5G system.
FIG. 5 is a flowchart illustrating a cell reselection procedure according to an aspect.
FIG. 6 is a flowchart illustrating a cell reselection procedure according to an embodiment of the present invention.
FIG. 7 is a block diagram of a wireless communication system in which an aspect.

**DESCRIPTION OF EXEMPLARY EMBODIMENTS**

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

For clarity, the following description will focus on LTE-A. However, technical features of the present invention are not limited thereto.

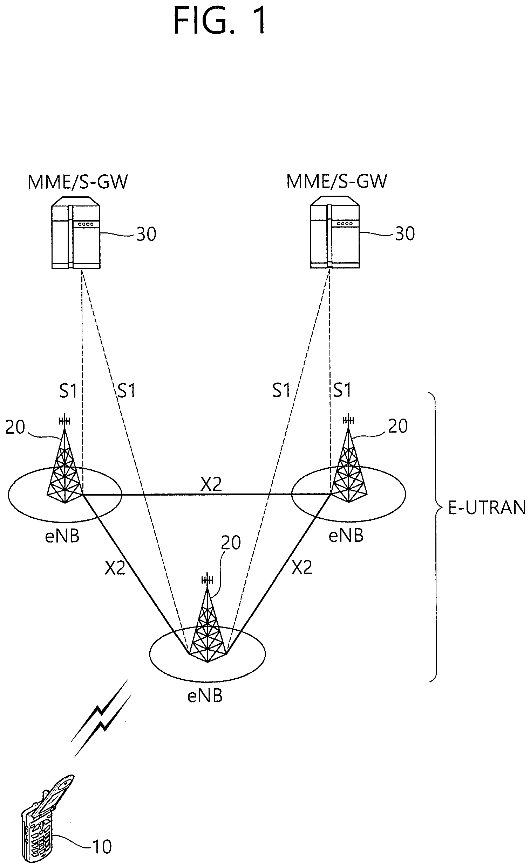

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), a base transceiver system (BTS), an access point, etc. One eNB 20 may be deployed per cell. There are one or more cells within the coverage of the eNB 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a serving gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN, and connected to external network.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighboring eNBs may have a meshed network structure that has the X2 interface. The eNBs 20 are connected to the EPC by means of an S1 interface. The eNBs 20 are connected to the MME by means of an S1-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

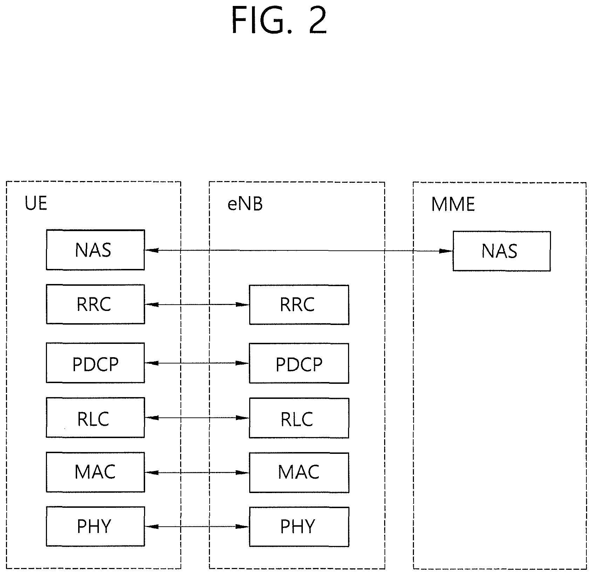

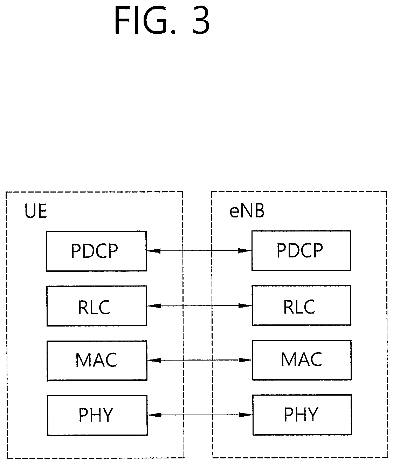

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (L1), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from a higher layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A non-access stratum (NAS) layer above the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

Hereinafter, RRC state of UE and RRC connection method is described below.

An RRC state indicates whether an RRC layer of the UE is logically connected to an RRC layer of the E-UTRAN. The RRC state may be divided into two different states such as an RRC connected state and an RRC idle state. When an RRC connection is established between the RRC layer of the UE and the RRC layer of the E-UTRAN, the UE is in RRC_CONNECTED, and otherwise the UE is in RRC_IDLE. Since the UE in RRC_CONNECTED has the RRC connection established with the E-UTRAN, the E-UTRAN may recognize the existence of the UE in RRC_CONNECTED and may effectively control the UE. Meanwhile, the UE in RRC_IDLE may not be recognized by the E-UTRAN, and a CN manages the UE in unit of a TA which is a larger area than a cell. That is, only the existence of the UE in RRC_IDLE is recognized in unit of a large area, and the UE must transition to RRC_CONNECTED to receive a typical mobile communication service such as voice or data communication.

In RRC_IDLE state, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell re-selection. Also, in RRC_IDLE state, no RRC context is stored in the eNB.

In RRC_CONNECTED state, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED state, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE state, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion.

A paging message is transmitted over all cells belonging to the same tracking area. If the UE moves from one TA to another TA, the UE will send a tracking area update (TAU) message to the network to update its location.

When the user initially powers on the UE, the UE first searches for a proper cell and then remains in RRC_IDLE in the cell. When there is a need to establish an RRC connection, the UE which remains in RRC_IDLE establishes the RRC connection with the RRC of the E-UTRAN through an RRC connection procedure and then may transition to RRC_CONNECTED. The UE which remains in RRC_IDLE may need to establish the RRC connection with the E-UTRAN when uplink data transmission is necessary due to a user's call attempt or the like or when there is a need to transmit a response message upon receiving a paging message from the E-UTRAN.

In order to manage the mobility of the terminal in the NAS layer positioned on the control planes of the terminal and the MME, an EPS mobility management (EMM) registered state and an EMM deregistered state may be defined. The EMM registered state and the EMM deregistered state may be applied to the terminal and the MME. Like a case of turning on the power of the terminal for the first time, an initial terminal is in the EMM deregistered state and the terminal performs a process of registering the terminal in the corresponding network through an initial attach procedure in order to access the network. When the attach procedure is successfully performed, the terminal and the MME is transitioned to the EMM registered state.

To manage a signaling connection between the UE and the EPC, two states are defined, i.e., an EPS connection management (ECM)-IDLE state and an ECM-CONNECTED state. These two states apply to the UE and the MME. When a UE in the ECM-IDLE state establishes an RRC connection with the E-UTRAN, the UE enters the ECM-CONNECTED state. When an MME in the ECM-IDLE state establishes an S1 connection with the E-UTRAN, the MME enters the ECM-CONNECTED state. When the UE is in the ECM-IDLE state, the E-UTRAN does not have context information of the UE. Therefore, the UE in the ECM-IDLE state performs a UE-based mobility related procedure such as cell selection or reselection without having to receive a command of the network. On the other hand, when the UE is in the ECM-CONNECTED state, a mobility of the UE is managed by the command of the network. If a location of the UE in the ECM-IDLE state becomes different from a location known to the network, the UE announces the location of the UE to the network through a tracking area update procedure.

Hereinafter, a 5G network structure is described.

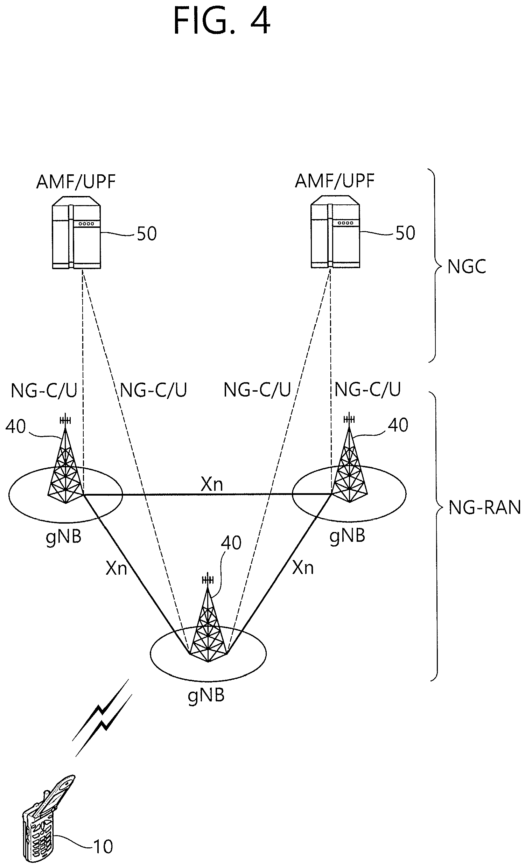

FIG. 4 shows a structure of a 5G system.

In case of an evolved packet core (EPC) having a core network structure of the existing evolved packet system (EPS), a function, a reference point, a protocol, or the like is defined for each entity such as a mobility management entity (MME), a serving gateway (S-GW), a packet data network gateway (P-GW), or the like.

On the other hand, in case of a 5G core network (or a NextGen core network), a function, a reference point, a protocol, or the like is defined for each network function (NF). That is, in the 5G core network, the function, the reference point, the protocol, or the like is not defined for each entity.

Referring to FIG. 4, the 5G system structure includes at least one UE 10, a next generation-radio access network (NG-RAN), and a next generation core (NGC).

The NG-RAN may include at least one gNB 40, and a plurality of UEs may be present in one cell. The gNB 40 provides the UE with end points of the control plane and the user plane. The gNB 40 is generally a fixed station that communicates with the UE 10 and may be referred to as another terminology, such as a base station (BS), a base transceiver system (BTS), an access point, or the like. One gNB 40 may be arranged in every cell. At least one cell may be present in a coverage of the gNB 40.

The NGC may include an access and mobility function (AMF) and a session management function (SMF) which are responsible for a function of a control plane. The AMF may be responsible for a mobility management function, and the SMF may be responsible for a session management function. The NGC may include a user plane function (UPF) which is responsible for a function of a user plane.

Interfaces for transmitting user traffic or control traffic may be used. The UE 10 and the gNB 40 may be connected by means of a Uu interface. The gNBs 40 may be interconnected by means of an X2 interface. Neighboring gNBs 40 may have a meshed network structure based on an Xn interface. The gNBs 40 may be connected to an NGC by means of an NG interface. The gNBs 40 may be connected to an AMF by means of an NG-C interface, and may be connected to a UPF by means of an NG-U interface. The NG interface supports a many-to-many-relation between the gNB 40 and the AMF/UPF 50.

A gNB host may perform functions such as functions for radio resource management, IP header compression and encryption of user data stream, selection of an AMF at UE attachment when no routing to an AMF can be determined from the information provided by the UE, routing of user plane data towards UPF(s), scheduling and transmission of paging messages (originated from the AMF), scheduling and transmission of system broadcast information (originated from the AMF or O&M), or measurement and measurement reporting configuration for mobility and scheduling.

An access and mobility function (AMF) host may perform primary functions such as NAS signalling termination, NAS signalling security, AS security control, inter CN node signalling for mobility between 3GPP access networks, idle mode UE reachability (including control and execution of paging retransmission), tracking area list management (for UE in idle and active mode), AMF selection for handovers with AMF change, access authentication, or access authorization including check of roaming rights.

A user plane function (UPF) host may perform primary functions such as anchor point for Intra-/inter-RAT mobility (when applicable), external PDU session point of interconnect to data network, packet routing & forwarding, packet inspection and user plane part of policy rule enforcement, traffic usage reporting, uplink classifier to support routing traffic flows to a data network, branching point to support multi-homed PDU session, QoS handling for user plane, e.g. packet filtering, gating, UL/DL rate enforcement, uplink traffic verification (SDF to QoS flow mapping), transport level packet marking in the uplink and downlink, or downlink packet buffering and downlink data notification triggering.

A session management function (SMF) host may perform primary functions such as session management, UE IP address allocation and management, selection and control of UP function, configuring traffic steering at UPF to route traffic to proper destination, controlling part of policy enforcement and QoS, or downlink data notification.

Hereinafter, an RRC_INACTIVE state of a UE is described.

In the discussion on the NR standardization, an RRC_INACTIVE state (RRC inactive state) has been newly introduced in addition to the existing RRC_CONNETED state and RRC_IDLE state. The RRC_INACTIVE state may be a concept similar to a lightly connected mode which is under discussion in LTE. The RRC_INACTIVE state is a state introduced to efficiently manage a specific UE (for example, mMTC UE). A UE in the RRC_INACTIVE state performs a radio control procedure similarly to a UE in the RRC_IDLE state in order to reduce power consumption. However, the UE in the RRC_INACTIVE state maintains a connection state between the UE and a network similarly to the RRC_CONNECTED state in order to minimize a control procedure required when transitioning to the RRC_CONNECTED state. In the RRC_INACTIVE state, a radio access resource is released, but wired access may be maintained. For example, in the RRC_INACTIVE state, the radio access resource is released, but an NG2 interface between a gNB and am NGC or an S1 interface between an eNB and an EPC may be maintained. In the RRC_INACTIVE state, a core network recognizes that the UE is normally connected to a BS. On the other hand, the BS may not perform connection management for the UE in RRC INACTIVE state.

Meanwhile, in the E-UTRAN, the UE in the RRC_CONNECTED state does not support the UE-based cell reselection procedure. However, the UE in the RRC_INACTIVE state can perform the cell reselection procedure, and in this case, the UE should inform the E-UTRAN of the location information of the UE.

Hereinafter, a method and procedure in which a UE selects a cell will be described.

A cell selection process is divided into two categories.

First, in an initial cell selection process, the UE does not have previous information about a radio channel. Therefore, in order to search for a suitable cell, the UE searches for all radio channels. The UE searches for a strongest cell in each channel. Thereafter, when the UE finds a suitable cell satisfying a cell selection criterion, the UE selects the corresponding cell.

Next, the UE may select a cell using stored information or using information broadcasting in the cell. Therefore, the UE may quickly select a cell, compared with the initial cell selection process. When the UE finds a cell satisfying a cell selection criterion, the UE selects the corresponding cell. When the UE does not find a suitable cell satisfying the cell selection criterion through this process, the UE performs an initial cell selection process.

After selecting any cell through the cell selection procedure, intensity or a quality of signals between the UE and the base station may be changed due to a change in mobility or a radio environment of the UE. Therefore, when a quality of the selected cell is deteriorated, the UE may select another cell providing a better quality. When the cell is again selected in this way, the UE selects a cell generally providing a better signal quality than that of the currently selected cell. This process is referred to as cell reselection. The cell reselection process has a basic object in selecting a cell providing a best quality to the UE in a quality aspect of a radio signal.

In addition to a quality aspect of a radio signal, the network may determine a priority for each frequency to notify the UE of the priority. The UE, having received such a priority considers the priority more preferentially than radio signal quality criteria in a cell reselection process.

As described above, there is a method of selecting or reselecting a cell according to signal characteristics of a radio environment, and in selecting a cell for reselection, there may be the following cell reselection methods according to RAT and frequency characteristic of the cell.

- Intra-frequency cell reselection: the UE reselects a cell having the same RAT as that of a camping cell and the same center-frequency as that of a camping cell
- Inter-frequency cell reselection: the UE reselects a cell having the same RAT as that of a camping cell and a center-frequency different from that of a camping cell
- Inter-RAT cell reselection: the UE reselects a cell using RAT different from camping RAT

A principle of a cell reselection process is as follows:

First, the UE measures a quality of a serving cell and a neighboring cell for cell reselection.

Second, cell reselection is performed based on cell reselection criteria. Cell reselection criteria have the following characteristics with respect to measurement of the serving cell and the neighboring cell.

Intra-frequency cell reselection is basically performed based on a ranking. The ranking is a work that defines an index value for cell reselection evaluation and that sequences cells in magnitude order of the index value using the index value. A cell having a best index is often referred to as a highest ranked cell. A cell index value is a value that applies a frequency offset or a cell offset, as needed based on a value in which a UE measures for the corresponding cell.
Inter-frequency cell reselection is performed based on a frequency priority provided by the network. The UE attempts to camp on in a frequency having a highest frequency priority. The network may provide a frequency priority to be commonly applied to UEs within a cell through broadcast signaling or may provide a priority for each frequency for each UE through dedicated signaling for each UE. A cell reselection priority provided through broadcast signaling may be referred to as a common priority, and a cell reselection priority set by a network for each UE may be referred to as a dedicated priority. When receiving the dedicated priority, the UE may together receive a validity time related to the dedicated priority. When receiving the dedicated priority, the UE starts a validity timer set to the together received validity time. While the validity timer operates, the UE applies a dedicated priority in an RRC idle mode. When the validity timer has expired, the UE discards a dedicated priority and again applies a common priority.
For inter-frequency cell reselection, the network may provide a parameter (e.g., frequency-specific offset) used for cell reselection for each frequency to the UE.
For intra-frequency cell reselection or inter-frequency cell reselection, the network may provide a neighboring cell list (NCL) to be used for cell reselection to the UE. The NCL includes a cell-specific parameter (e.g., cell-specific offset) to be used for cell reselection.
For intra-frequency or inter-frequency cell reselection, the network may provide a cell reselection black list to be used for cell reselection to the UE. For a cell included in the black list, the UE does not perform cell reselection.
Next, the ranking performed in the cell reselection evaluation process will be described.
A ranking criterion used to give priority to a cell is defined as shown in Equation 1.

$$[\text{Equation 1}]\ Rs = Qmeas,s + Qhysts$$

$$Rn = Qmeas,n - Qoffset$$

Herein, Rs is the rank index of the serving cell, Rn is the rank index of the neighboring cell, Qmeas,s is the quality value measured by the UE with respect to the serving cell, Qmeas,n is the quality value measured by the UE with respect to the neighboring cell, Qhyst is the hysteresis value for rankings, and Qoffset is the offset between two cells.
At the intra-frequency, Qoffset = Qoffsets,n when the UE receives the offset (Qoffsets, n) between the serving cell and the neighboring cell, and Qoffset = 0 if the UE has not received Qoffsets,n.
Qoffset = Qoffsets,n + Qfrequency when the UE receives the offset (Qoffsets,n) for the corresponding cell at the inter-frequency, and Qoffset = Qfrequency if the UE has not received Qoffsets,n.
When the ranking indicator Rs of the serving cell and the ranking indicator Rn of the neighboring cell fluctuate in a state similar to each other, the ranking of the fluctuation result may be reversed so that the UE can reselect the cells alternately. Qhyst is a parameter to give hysteresis in cell reselection and to prevent the UE from alternating between two cells.
The UE measures Rs of the serving cell and Rn of the neighboring cell according to the above equation and regards the cell having the highest ranking index value as the highest ranked cell and reselects this cell. If the reselected cell is not a suitable cell, the UE excludes the corresponding frequency or the corresponding cell from the cell reselection target.
In general, high frequency bands are mainly used in small cells for capacity enhancement. In other words, the high frequency band is not suitable for use in a UE moving at a high speed. Therefore, when the UE moves at a speed higher than a specific threshold value, it is necessary to lower the priority of the high frequency band. Conversely, when the UE moves at a speed lower than a specific threshold value, the UE can increase the priority of the high frequency band.

On the other hand, in NR, various services such as URLLC and eMBB mMTC, which have characteristics different from existing technologies, are introduced. In order to provide these new services, additional functions are required to be performed by the network. For example, a network may have different kinds of backhaul, or be able to synchronize multiple cells. To this end, a large amount of secondary information needs to be broadcast. Therefore, for efficient use of radio resources, some specific services need to be supported for a limited number of cells, such as an MBMS service in an LTE network.

Hereinafter, a method of performing a cell reselection procedure according to an aspect is described. According to an aspect, a UE may perform a cell reselection procedure based on a service of interest of a user, a capability of the UE, an RRC state of the UE, and a moving speed of the UE.

The UE may perform a cell reselection procedure based on a service of interest.

Some services may be provided not only when the UE is in the RRC connection state but also in the case of the RRC idle state allowing mobility controlled by the UE. If the service of interest is not supported in all the cells, the UE should select a neighboring cell among the neighboring cells to receive the service in the RRC idle state.

The cell selection procedure based on the service of interest can be performed with reference to the MBMS reception procedure in LTE. The UE considers the MBMS frequency providing the MBMS service of interest as the highest priority and if it can receive the MBMS service while staying in the cell, the UE selects the best cell among the cells providing the corresponding frequency.

In this way, some broadcast services available in the RRC idle state can also be used in the NR, and a UE interested in the service should stay in the cell supporting the service. To this end, the UE should be able to select the appropriate cell based on the service of interest.

The UE can perform the cell reselection procedure based on the capability of the UE.

Some services can be supported only in RRC connection state. If the UE is interested in such a service but the traffic is not in progress to perform such a service, the UE will remain in the RRC idle state even though it can support the service.

It is assumed that a UE is interested in a public safety service but is staying in a cell that does not support the service. After the UE receives the paging message related to the service, the UE enters the RRC connection state and can be handed over to a cell supporting the corresponding service. In the case of delay sensitive services such as public safety services, additional delays due to procedures such as handover can be very lethal.

For this reason, in the case of delay sensitive services such as URLLC, public safety service and V2V, although the service is not supported in the RRC idle state, in order to minimize the service delay, it is advantageous for the UE in the RRC idle state to stay in the cell supporting the service.

Moreover, in the case of delay sensitive services, it may be considered to separate the paging to reduce service delays due to paging. That is, paging having a period shorter than a normal paging period can be provided. In this case, the separated paging can be provided only to the cell in which the service is supported.

The UE can perform the cell reselection procedure based on the RRC state of the UE.

If the mobility controlled by the UE is supported by the UE in the RRC disabled state, the UE can select another cell according to the RRC state of the UE. For example, an RRC disabled state may be allowed for a UE in certain restricted areas. Then, the UE in the RRC disabled state can regard the frequency belonging to the restricted area as having the highest priority so as to remain in the RRC disabled state as much as possible. Otherwise, the UE in the RRC Idle state and the UE in the RRC Inactive state may use different absolute frequency priorities for cell reselection. Here, the absolute frequency priority indicates a frequency priority based only on the quality measurement value for the frequency. That is, in this embodiment, the absolute frequency priority means the priority of frequencies that do not consider the RRC state of the UE at all.

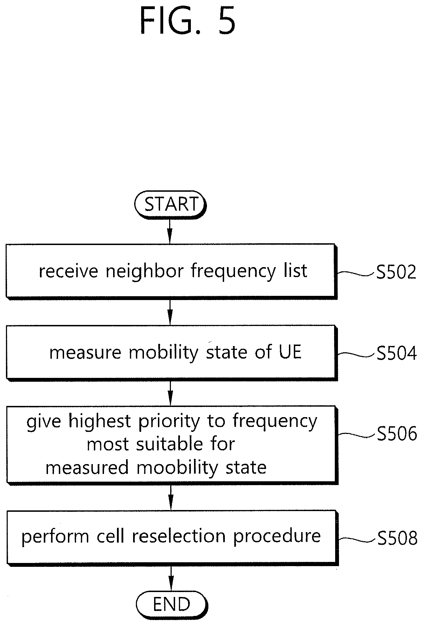

When a UE moves, the UE can perform a cell reselection procedure based on the movement speed of the UE. Hereinafter, a cell reselection procedure according to an aspect will be described in detail with reference to FIG. 5. Aspects of the present disclosure can be applied to the UEs not only in the RRC connection state but also in the RRC idle state and the RRC inactive state. Also, the UE according to an aspect may be a UE supporting NB-IoT.

In step S502, the UE can receive the neighbor frequency list from the serving cell. The list may be broadcast from the serving cell to the UE. The list may include absolute frequency priority and mobility state information for each neighbor frequency. The absolute frequency priority may be priority information generated based on the quality value measured for each frequency. The mobility state information indicates which mobility state is appropriate for a particular frequency. That is, the mobility state information indicates the mobility state of the UE that can receive the most efficiently by frequencies. Table 1 below is an example showing mobility state information.

[Table 1]

|  | Mobility state information |  |
|---|---|---|
| Frequency A | High mobility state | Normal mobility state |
| Frequency B | Low mobility state | - |
| Frequency C | - | - |

As shown in Table 1, the mobility state information may divide the moving speed that the UE can have into a plurality of sections, and may indicate the section of the moving speed of the UE that is most suitable for each frequency. For example, the high mobility state may indicate the section where the mobile speed of the UE is higher than 60 km/h. The normal mobility state may indicate the section where the mobile speed is in the range of 20 km/h to 60 km/h. The low mobility state may indicate the section where the mobile speed of the UE is less than 20 km/h. In the above-mentioned example, the mobility state information indicates that the frequency A is suitable for a UE whose moving speed is 20 km/h or more, and the frequency B is suitable for a UE whose moving speed is less than 20 km/h. On the other hand, the mobility state information may not include information on the mobility state suitable for the frequency C. That is, the priority of the frequency C may follow the priority of the frequency C included in the absolute frequency priority.

On the other hand, according to one embodiment, the frequency B band may be higher than the frequency A band. That is, the mobility state information may indicate that a higher frequency is suitable for a slower moving speed. Also, frequency B may be a frequency suitable for use in a small cell.

Table 2 is another example showing mobility state information.

[Table 2]

|  | Mobility state information |
|---|---|
| Frequency A | Moving speed of UE is first threshold value (= 50 km/h) or higher |
| Frequency B | Moving speed of UE is less than second threshold value (= 10 km/h) |
| Frequency C | - |

According to one embodiment, the mobility state information may indicate a section defined based on one or more threshold velocity values for each frequency. In the above-mentioned example, the mobility state information indicates that the frequency A is suitable for a UE whose moving speed is 50 km/h or more, and the frequency B is suitable for a UE whose moving speed is less than 10 km/h.

On the other hand, the mobility state information may not include the mobility state information about the frequency C. The frequency C for which the most suitable mobility state of the UE is not defined may be regarded as a frequency most suitable for the moving speed between the first threshold value and the second threshold value. In addition, the frequency C may be prioritized according to the existing absolute frequency priorities.

In step S504, the UE can measure the mobility state or the moving speed of the UE.

In step S506, the UE can regard the frequency most suitable to the mobility state or movement speed of the UE as having the highest priority. In addition, the UE can regard a frequency that is not most suitable for the mobility state or the moving speed of the UE as having the lowest priority.

According to one embodiment, the measured mobility state of the UE may be a normal mobility state. Also, as shown in Table 1, the UE can receive mobility state information of a neighboring cell. Then, the UE can regard the frequency A most suitable for the mobility state of the UE as having the highest priority. Specifically, the UE can assign the highest priority to a frequency that can receive information most efficiently in its mobility state based on the mobility state information. In other words, the UE can regard the frequency best suited to its mobility state as having the highest priority in absolute frequency priority. Further, the UE can regard the frequency B as having the lowest priority.

According to another embodiment, the mobile speed of the UE can be measured as 3 km/h. As shown in Table 2, the UE can receive mobility state information of a neighboring cell. Then, the UE can regard the frequency B most suitable for the moving speed of the UE as having the highest priority. Specifically, the UE can assign the highest priority to a frequency that can receive information most efficiently in its moving speed based on the mobility state information. In other words, the UE can regard the frequency best suited to its moving speed as having the highest priority in absolute frequency priority. Further, the UE can regard the frequency A as having the lowest priority.

In step S508, the UE may perform a cell reselection procedure based on the changed frequency priority. The UE can reselect the cell having the highest priority among the cells satisfying the minimum requirement.

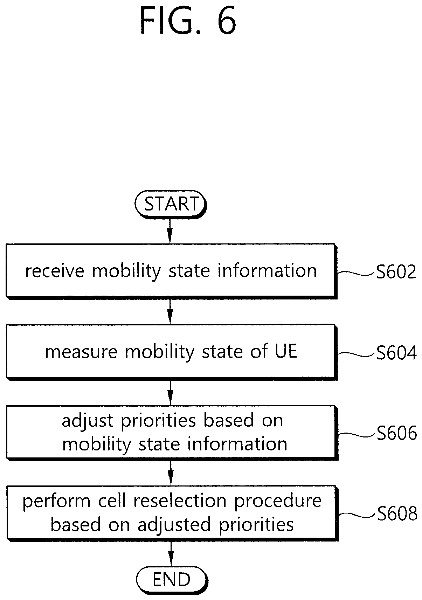

FIG. 6 is a flowchart illustrating a method for performing a cell reselection procedure according to an embodiment of the present invention.

In step S602, the UE can receive the mobility state information indicating the mobility state of the UE that is most suitable for each frequency. The mobility state information indicates information on the movement speed of the UE. In addition, the mobility state information may include absolute priority information generated based on the quality value measured for each frequency. According to an exemplary embodiment, the mobility state information may divide a moving speed that the UE can have into a plurality of sections, and may indicate a section of the moving speed of the UE that is most suitable for each frequency. According to another embodiment, the mobility state information may indicate a section defined based on one or more threshold velocity values for each frequency. Meanwhile, the mobility state information may indicate that a higher frequency is suitable for a slower moving speed.

In step S604, the UE can measure the mobility state of the UE. That is, the UE can measure its own moving speed.

In step S606, based on the mobility state information, the UE can adjust the priority by considering the frequency best suited to the measured mobility state as having the highest priority. The step of adjusting the priority may include regarding a frequency other than the frequency best suited to the mobility state of the UE as having the lowest priority. In addition, the step of adjusting the priority may include determining whether a frequency most suitable for the mobility state of the UE provides a service of interest. When the UE provides a service that is most suitable for the mobility state of the UE, the most suitable frequency may be regarded as having the highest priority.

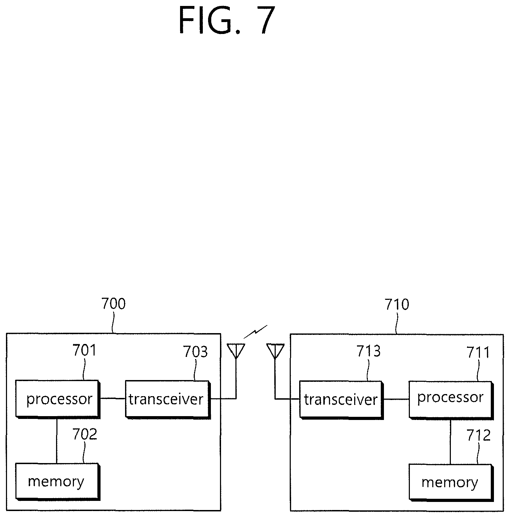

FIG. 7 is a block diagram illustrating a wireless apparatus in which an aspect can be implemented.

A BS 700 includes a processor 701, a memory 702, and a radio frequency (RF) unit 703. The memory 702 is coupled to the processor 701, and stores a variety of information for driving the processor 701. The RF unit 703 is coupled to the processor 701, and transmits and/or receives a radio signal. The processor 701 implements the proposed functions, procedures, and/or methods. In the aforementioned embodiments, an operation of the BS may be implemented by the processor 701.

A UE 710 includes a processor 711, a memory 712, and an RF unit 713. The memory 712 is coupled to the processor 711, and stores a variety of information for driving the processor 711. The RF unit 713 is coupled to the processor 711, and transmits and/or receives a radio signal. The processor 61 implements the proposed functions, procedures, and/or methods. In the aforementioned embodiments, an operation of the UE 710 may be implemented by the processor 711.

The processors 711 may include application-specific integrated circuit (ASIC), other chipset, logic circuit and/or data processing device. The memories may include read-only memory (ROM), random access memory (RAM), flash memory, memory card, storage medium and/or other storage device. The RF units may include baseband circuitry to process radio frequency signals. When the embodiments are implemented in software, the techniques described herein can be implemented with modules (e.g., procedures, functions, and so on) that perform the functions described herein. The modules can be stored in memories and executed by processors. The memories can be implemented within the processors or external to the processors in which case those can be communicatively coupled to the processors via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted.

What has been described above includes examples of the various aspects. It is, of course, not possible to describe every conceivable combination of components or methodologies for purposes of describing the various aspects, but one of ordinary skill in the art may recognize that many further combinations and permutations are possible. Accordingly, the subject specification is intended to embrace all such alternations, modifications and variations that fall within the scope of the appended claims.

**Claims**

1. A method for performing, by a terminal, a cell reselection procedure in a wireless communication system, the method comprising:

   receiving (S602) mobility state information indicating a most suitable mobility state of the terminal for each of a plurality of frequencies;
   measuring (S604) a mobility state of the terminal;
   adjusting (S606) a priority of a most suitable frequency for the measured mobility state to have a highest priority, wherein said most suitable frequency is determined based on the mobility state information;

wherein said method is **characterized by**:

determining that a cell on the most suitable frequency is able to provide a paging with shorter periodicity than a general paging, when the terminal is interested in an ultra-reliable low latency communications, URLLC, service; and
performing (S608) a cell reselection procedure to the most suitable frequency, upon determining that the cell is able to provide the paging with the shorter periodicity.

2. The method of claim 1, wherein the mobility state information includes information on a moving speed of the terminal.

3. The method of claim 1, wherein the mobility state information includes absolute priority information constructed based on a quality value measured for each of the frequencies.

4. The method of claim 1, wherein the mobility state information divides a moving speed, which is assumed to be held by the terminal, into a plurality of ranges, and indicates a range of the terminal's moving speed most suitable for each of the frequencies.

5. The method of claim 1, wherein the mobility state information indicates a range defined based on one or more threshold speed values for each of the frequencies.

6. The method of claim 1, wherein the mobility state information indicates that higher frequencies are suitable for slower moving speeds.

7. The method of claim 1, further comprising: regarding a frequency other than the frequency most suitable for the measured mobility state as having a lowest priority.

8. The method of claim 1, wherein by determining that said cell on the most suitable frequency is able to provide a paging with shorter periodicity, the terminal determines that said cell on the frequency most suitable for the measured mobility state supports a service of interest, wherein said service of interest is said URLLC service.

9. The method of claim 8, further comprising: regarding the frequency most suitable for the measured mobility state as having the highest priority if said cell on the frequency most suitable for the measured mobility state supports the service of interest.

10. A terminal for performing cell reselection procedure in a wireless communication system, the terminal comprising:

a memory;
a transceiver; and
a processor for connecting the memory to the transceiver,
wherein the processor is configured to:

receive mobility state information indicating a most suitable mobility state of the terminal for each of a plurality of frequencies;
measure a mobility state of the terminal; determine, based on the mobility state information, a most suitable frequency for the measured mobility state;
adjust a priority of said most suitable frequency for the measured mobility state to have a highest priority,

wherein said terminal is **characterized in that** said processor is further configured to:

determine that a cell on the most suitable frequency is able to provide a paging with shorter periodicity than a general paging, when the terminal is interested in an ultra-reliable low latency communications, URLLC, service; and
perform a cell reselection procedure to the most suitable frequency, in response to the determination that the cell is able to provide the paging with the shorter periodicity.

11. The terminal of claim 10, wherein the mobility state information includes absolute priority information constructed based on a quality value measured for each of the frequencies.

12. The terminal of claim 10, wherein the mobility state information divides a moving speed, which is assumed to be held by the terminal, into a plurality of ranges, and indicates a range of the terminal's moving speed most suitable for each of the frequencies.

13. The terminal of claim 10, wherein the mobility state information indicates a range defined based on one or more threshold speed values for each of the frequencies.

14. The terminal of claim 10, wherein the mobility state information indicates that higher frequencies are suitable for slower moving speeds.

15. The terminal of claim 10, wherein the processor is further configured to regard a frequency other than the frequency most suitable for the measured mobility state as having a lowest priority.


**Patentansprüche**

1. Verfahren zur Durchführung eines Zellenwiederauswahlverfahrens durch ein Endgerät in einem Drahtloskommunikationssystem, wobei das Verfahren umfasst:

   Empfangen (S602) von Mobilitätszustandsinformation, die einen am besten geeigneten Mobilitätszustand des Endgeräts für jede einer Mehrzahl von Frequenzen angibt;
   Messen (S604) eines Mobilitätszustands des Endgeräts;
   Einstellen (S606) einer Priorität einer am besten geeigneten Frequenz für den gemessenen Mobilitätszustand, damit diese eine höchste Priorität hat, wobei die am besten geeignete Frequenz basierend auf der Mobilitätszustandsinformation bestimmt wird; und
   das Verfahren **gekennzeichnet ist durch**:

   Bestimmen, dass eine Zelle auf der am besten geeigneten Frequenz einen Funkruf mit einer kürzeren Periodizität als ein allgemeiner Funkruf bereitstellen kann, wenn das Endgerät an einem äußerst zuverlässigen Niedriglatenz-, URLLC, Dienst interessiert ist; und
   Durchführen (S608) eines Zellenwiederauswahlverfahrens auf der am besten geeigneten Frequenz, nachdem bestimmt wurde, dass die Zelle den Funkruf mit der kürzeren Periodizität bereitstellen kann.

2. Verfahren nach Anspruch 1, wobei die Mobilitätszustandsinformation eine Information über eine Bewegungsgeschwindigkeit des Endgeräts enthält.

3. Verfahren nach Anspruch 1, wobei die Mobilitätszustandsinformation eine absolute Prioritätsinformation enthält, die basierend auf einem für jede der Frequenzen gemessenen Qualitätswert konstruiert wird.

4. Verfahren nach Anspruch 1, wobei die Mobilitätszustandsinformation eine Bewegungsgeschwindigkeit, von der angenommen wird, dass sie vom Endgerät eingehalten wird, in eine Mehrzahl von Bereichen unterteilt und einen Bereich der Bewegungsgeschwindigkeit des Endgeräts angibt, der für jede der Frequenzen am besten geeignet ist.

5. Verfahren nach Anspruch 1, wobei die Mobilitätszustandsinformation einen Bereich angibt, der basierend auf einem oder mehreren Schwellengeschwindigkeitswerten für jede der Frequenzen definiert ist.

6. Verfahren nach Anspruch 1, wobei die Mobilitätszustandsinformation angibt, dass höhere Frequenzen für langsamere Bewegungsgeschwindigkeiten geeignet sind.

7. Verfahren nach Anspruch 1, ferner umfassend:
   Betrachten einer anderen Frequenz als die für den gemessenen Mobilitätszustand am besten geeignete Frequenz als die mit der niedrigsten Priorität.

8. Verfahren nach Anspruch 1, wobei das Endgerät durch Bestimmen, dass die Zelle auf der am besten geeigneten Frequenz einen Funkruf mit kürzerer Periodizität bereitstellen kann, bestimmt, dass die Zelle auf der Frequenz, die für den gemessenen Mobilitätszustand am besten geeignet ist, einen Dienst von Interesse unterstützt, wobei der Dienst von Interesse der URLLC-Dienst ist.

9. Verfahren nach Anspruch 8, ferner umfassend:
Betrachten der für den gemessenen Mobilitätszustand am besten geeigneten Frequenz als die mit der höchsten Priorität, wenn die Zelle auf der für den gemessenen Mobilitätszustand am besten geeigneten Frequenz den Dienst von Interesse unterstützt.

10. Endgerät zur Durchführung eines Zellenwiederauswahlverfahrens in einem Drahtloskommunikationssystem, wobei das Endgerät umfasst:

einen Speicher;
einen Transceiver; und
einen Prozessor zum Verbinden des Speichers mit dem Transceiver,
wobei der Prozessor eingerichtet ist zum:

Empfangen von Mobilitätszustandsinformation, die einen am besten geeigneten Mobilitätszustand des Endgeräts für jede einer Mehrzahl von Frequenzen angibt;
Messen eines Mobilitätszustands des Endgeräts;
Bestimmen einer am besten geeigneten Frequenz für den gemessenen Mobilitätszustand basierend auf der Mobilitätszustandsinformation;
Einstellen einer Priorität der am besten geeigneten Frequenz für den gemessenen Mobilitätszustand, damit diese eine höchste Priorität hat,

wobei das Endgerät **dadurch gekennzeichnet ist, dass** das Verfahren eingerichtet ist zum:

Bestimmen, dass eine Zelle auf der am besten geeigneten Frequenz einen Funkruf mit einer kürzeren Periodizität als ein allgemeiner Funkruf bereitstellen kann, wenn das Endgerät an einem äußerst zuverlässigen Niedriglatenz-, URLLC, Dienst interessiert ist; und
Durchführen eines Zellenwiederauswahlverfahrens auf der am besten geeigneten Frequenz als Antwort auf die Bestimmung, dass die Zelle den Funkruf mit der kürzeren Periodizität bereitstellen kann.

11. Endgerät nach Anspruch 10, wobei die Mobilitätszustandsinformation eine absolute Prioritätsinformation enthält, die basierend auf einem für jede der Frequenzen gemessenen Qualitätswert konstruiert wird.

12. Endgerät nach Anspruch 10, wobei die Mobilitätszustandsinformation eine Bewegungsgeschwindigkeit, von der angenommen wird, dass sie vom Endgerät eingehalten wird, in eine Mehrzahl von Bereichen unterteilt und einen Bereich der Bewegungsgeschwindigkeit des Endgeräts angibt, der für jede der Frequenzen am besten geeignet ist.

13. Endgerät nach Anspruch 10, wobei die Mobilitätszustandsinformation einen Bereich angibt, der basierend auf einem oder mehreren Schwellengeschwindigkeitswerten für jede der Frequenzen definiert ist.

14. Endgerät nach Anspruch 10, wobei die Mobilitätszustandsinformation angibt, dass höhere Frequenzen für langsamere Bewegungsgeschwindigkeiten geeignet sind.

15. Anschluss nach Anspruch 10, wobei der Prozessor ferner eingerichtet ist zum:
Betrachten einer anderen Frequenz als die für den gemessenen Mobilitätszustand am besten geeignete Frequenz als die mit der niedrigsten Priorität.

## Revendications

1. Procédé d'exécution, par un terminal, d'une procédure de resélection de cellule dans un système de communication sans fil, le procédé consistant à :

recevoir (S602) des informations relatives à l'état de mobilité indiquant un état de mobilité le plus approprié du terminal pour chacune des fréquences de la pluralité de fréquences ;
mesurer (S604) un état de mobilité du terminal ;
régler (S606) une priorité d'une fréquence la plus appropriée pour l'état de mobilité mesuré pour qu'elle ait la plus haute priorité, ladite fréquence la plus appropriée étant déterminée en fonction des informations relatives à l'état de mobilité ;
ledit procédé étant **caractérisé par** :

la détermination qu'une cellule sur la fréquence la plus appropriée est apte à fournir une recherche ayant une périodicité inférieure à une recherche générale, lorsque le terminal est intéressé à un service de communications à faible latence très fiables, URLLC ; et
l'exécution (S608) de procédure de resélection de cellule à la fréquence la plus appropriée, lorsqu'il est déterminé que la cellule est apte à fournir la recherche de courte périodicité.

2. Procédé selon la revendication 1, les informations relatives à l'état de mobilité comprenant des informations relatives à une vitesse de déplacement du terminal.

3. Procédé selon la revendication 1, les informations relatives à l'état de mobilité comprenant des informations de priorité absolue construites sur la base d'une valeur de qualité mesurée pour chacune des fréquences.

4. Procédé selon la revendication 1, les informations relatives à l'état de mobilité divisant une vitesse de mouvement, qui est présumée être conservée par le terminal dans une pluralité de plages, et indiquant une plage de la vitesse de déplacement du terminal la plus appropriée pour chacune des fréquences.

5. Procédé selon la revendication 1, les informations relatives à l'état de mobilité indiquant une plage définie sur la base d'une ou plusieurs valeurs de vitesse seuil pour chacune des fréquences.

6. Procédé selon la revendication 1, les informations relatives à l'état de mobilité indiquant que les fréquences élevées sont appropriées aux faibles vitesses de déplacement.

7. Procédé selon la revendication, consistant en outre à :
considérer une fréquence autre que la fréquence la plus appropriée à l'état de mobilité mesurée comme ayant la priorité la plus basse.

8. Procédé selon la revendication 1, en déterminant que ladite cellule sur la fréquence la plus appropriée est apte à une recherche à une périodicité courte, le terminal déterminant que ladite cellule sur la fréquence la plus appropriée pour l'état de mobilité mesurée prend en charge un service d'intérêt, ledit service d'intérêt étant ledit service URLLC.

9. Procédé selon la revendication 8, comprenant en outre :
concernant la fréquence la plus appropriée pour l'état de mobilité mesurée comme ayant la priorité la plus élevée si ladite cellule sur la fréquence la plus appropriée pour l'état de mobilité mesurée prend en charge le service d'intérêt.

10. Terminal pour effectuer la procédure de resélection de cellule dans un système de communication sans fil, le terminal comprenant :

une mémoire ;
un émetteur-récepteur ; et
un processeur pour connecter la mémoire à l'émetteur-récepteur,
le processeur étant conçu pour :

recevoir les informations d'état de mobilité indiquant un état de mobilité le plus approprié pour chaque fréquence parmi la pluralité des fréquences ;
mesurer un état de mobilité du terminal ;
déterminer, en fonction des informations d'état de mobilité, une fréquence la plus appropriée pour l'état de mobilité mesuré ;
régler une priorité de ladite fréquence la plus appropriée pour l'état de mobilité mesuré pour obtenir une priorité la plus élevée,

ledit terminal étant **caractérisé en ce que** ledit processeur est en outre configuré pour :

déterminer qu'une cellule sur la fréquence la plus appropriée est apte à fournir une recherche ayant une périodicité plus courte qu'une recherche générale, lorsque le terminal est intéressé à un service d'une communication de faible latence ultra-fiable, URLLC, ; et
effectuer une procédure de resélection de cellule à la fréquence la plus appropriée, en réponse à la détermination que la cellule est apte à fournir la recherche à la périodicité la plus courte.

11. Terminal selon la revendication 10, les informations d'état de mobilité comprenant des informations de priorité absolue construites sur la base d'une valeur de qualité mesurée pour chacune des fréquences.

12. Terminal selon la revendication 10, les informations d'état de mobilité divisant la vitesse de déplacement, qui est supposée être conservée par le terminal, dans une pluralité de gammes, et indiquant une gamme de la vitesse du terminal la plus appropriée pour chacune des fréquences.

13. Terminal selon la revendication 10, les informations d'état de mobilité indiquant une gamme définie en fonction d'au moins une valeur de vitesse seuil pour chacune des fréquences.

14. Terminal selon la revendication 10, les informations d'état de mobilité indiquant que des fréquences plus élevées sont appropriées pour des vitesses de déplacement plus faibles.

15. Terminal selon la revendication 10, le processeur étant en outre configuré pour considérer une fréquence autre que la fréquence la plus appropriée pour l'état de mobilité mesuré comme ayant une priorité plus faible.

# FIG. 1

# FIG. 2

# FIG. 3

# FIG. 4

# FIG. 5

START

receive neighbor frequency list — S502

measure mobility state of UE — S504

give highest priority to frequency
most suitable for
measured moobility state — S506

perform cell reselection procedure — S508

END

# FIG. 6

START

receive mobility state information — S602

measure mobility state of UE — S604

adjust priorities based on mobility state information — S606

perform cell reselection procedure based on adjusted priorities — S608

END

# FIG. 7

**EP 3 518 582 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012137041 A1
- WO 2009007720 A2

- WO 2010123416 A1

**Non-patent literature cited in the description**

- *3GPP TS 36.304, v14.0.0*